(19) Europäisches Patentamt / European Patent Office / Office européen des brevets

(11) **EP 4 019 887 B1**

(12) **FASCICULE DE BREVET EUROPEEN**

(45) Date de publication et mention de la délivrance du brevet:
**04.02.2026 Bulletin 2026/06**

(21) Numéro de dépôt: **21217213.4**

(22) Date de dépôt: **22.12.2021**

(51) Classification Internationale des Brevets (IPC):
**G01B 7/00** *(2006.01)*     **G01D 5/14** *(2006.01)*

(52) Classification Coopérative des Brevets (CPC):
**G01B 7/003; G01D 5/145**

(54) **DISPOSITIF DE DÉTECTION DE DÉRIVE DE POSITION POUR ÉLÉMENT MOBILE ANIMÉ D'UN MOUVEMENT CYCLIQUE**

VORRICHTUNG ZUM ERKENNEN VON POSITIONSABWEICHUNGEN FÜR EIN BEWEGLICHES ELEMENT, DAS DURCH EINE ZYKLISCHE BEWEGUNG ANGETRIEBEN WIRD

DEVICE FOR DETECTING A SHIFT IN POSITION FOR AN ANIMATED MOBILE ELEMENT OF A CYCLIC MOVEMENT

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **23.12.2020 FR 2014094**

(43) Date de publication de la demande:
**29.06.2022 Bulletin 2022/26**

(73) Titulaire: **Commissariat à l'Energie Atomique et aux Energies Alternatives**
**75015 Paris (FR)**

(72) Inventeur: **BERANGER, Marc**
**38054 GRENOBLE cedex 09 (FR)**

(74) Mandataire: **INNOV-GROUP**
**209 Avenue Berthelot**
**69007 Lyon (FR)**

(56) Documents cités:
| EP-A1- 3 284 665 | WO-A1-00/70438 |
| DE-A1- 10 328 339 | DE-A1- 102016 003 993 |
| DE-A1- 19 853 062 | GB-A- 2 123 562 |
| US-A1- 2005 083 041 | US-A1- 2019 250 214 |

## Description

DOMAINE TECHNIQUE

L'invention concerne le domaine du contrôle des éléments mobiles disposés à l'intérieur d'une enceinte fermée. L'invention concerne plus précisément les agencements mécaniques dans lesquels une pièce mobile est difficilement accessible à l'intérieur d'une enceinte, cette pièce mobile pouvant subir une dérive de sa position de travail. Une telle enceinte fermée peut être par exemple sous haute pression, sous vide, ou pleine d'un fluide particulier. Dans certaines applications critiques, il est nécessaire de détecter voire de mesurer cette dérive de position à des fins de sureté de fonctionnement ou de maintenance.

De nombreuses applications mettent en œuvre des enceintes fermées ne pouvant être traversée par des conducteurs électriques, et dans lesquelles tout perçage ou usinage qui pourraient fragiliser cette enceinte sont proscrits.

ART ANTÉRIEUR

Les mesures de dérive de la position d'un élément mobile en mouvement dans une enceinte sont généralement réalisées par des capteurs de proximité inductifs ou capacitifs.

La demande de brevet US4689990 décrit un tel capteur nécessitant l'usinage d'un logement dans l'enceinte pour son montage. Cet usinage peut entrainer une fragilisation de l'enceinte, et nécessite des moyens d'étanchéité.

La demande de brevet JP3081075 décrit également un tel capteur comportant une cible magnétique adaptée à être couplée à un élément mobile en rotation et qui présente une signature magnétique variable suivant une direction dans laquelle un mouvement de dérive est à détecter. Ce capteur nécessite également la présence d'usinages dans le corps de l'enceinte.

Ces capteurs de l'art antérieur nécessitent ainsi une altération de l'enceinte et leur usage est donc exclu pour les applications les plus sévères dans lesquelles l'enceinte présente une forte épaisseur et dans lesquelles aucune altération de cette enceinte n'est permise.

La demande de brevet US8527214 résout certains des problèmes décrits précédemment. Ce document décrit un dispositif de détection de dérive de position pour un élément en rotation, ce capteur étant basé sur une transmission mécanique du déplacement axial de l'élément en rotation. Une dérive axiale de l'élément en rotation est détectée grâce à un palpeur au contact de l'élément en rotation, et grâce à un transducteur de déplacement de type potentiomètre. Cette solution essentiellement mécanique ne permet cependant pas une détection précise des évènements de dérive et est soumise aux aléas propres aux solutions mécaniques (dispersions, chaines de cotes à maitriser, tolérances dimensionnelles, etc.).

Le document DE19853062 décrit un dispositif de détection de dérive de position pour un élément mobile selon l'état de la technique.

EXPOSÉ DE L'INVENTION

L'invention a pour but d'améliorer les dispositifs de détection de dérive de position de l'art antérieur.

À cet effet, l'invention vise une machine munie d'un dispositif de détection de dérive de position conforme à la revendication 1.

Un tel dispositif de détection de dérive de position permet une mesure extrêmement précise de la variation de la position de l'élément mobile suivant la direction de dérive. Cette mesure est réalisée sans aucune altération de l'enceinte dans laquelle est disposé l'élément mobile.

L'enceinte dans laquelle est disposé l'élément mobile peut être par ailleurs une enceinte de forte épaisseur propre à certaines applications de haute pression, par exemple.

L'invention est particulièrement avantageuse pour les situations critiques qui présentent en combinaison un élément mobile de masse importante, une enceinte de protection étanche de forte épaisseur, et une pression importante. L'invention est particulièrement indiquée notamment pour des applications industrielles de grandes dimensions telles que des pompes à eau et des turbines de centrales hydroélectriques ou nucléaires, des compresseurs de grandes machines frigorifiques, etc.

Le dispositif de détection de dérive de position selon l'invention, et la machine selon l'invention, peuvent comporter les caractéristiques additionnelles, seules ou en combinaison, qui sont définies dans les revendications dépendantes.

PRÉSENTATION DES FIGURES

D'autres caractéristiques et avantages de l'invention ressortiront de la description non limitative qui suit, en référence aux dessins annexés dans lesquels :

- La figure 1 est une vue schématique en coupe d'une machine munie d'un dispositif de détection de dérive de position selon l'invention ;

- La figure 2 représente un dispositif de détection de dérive de position ne faisant pas partie de l'invention ;

- La figure 3 illustre le fonctionnement du dispositif de la figure 2 ;

- La figure 4 illustre le fonctionnement du dispositif de la figure 2 ;

- La figure 5 représente un dispositif de détection de dérive de position ne faisant pas partie de l'invention ;

- La figure 6 représente un dispositif de détection de dérive de position selon l'invention ;

- La figure 7 représente une variante de cible magnétique pour un dispositif de détection de dérive de position selon l'invention.

Les éléments similaires communs aux divers modes de réalisation portent les mêmes numéros de renvoi aux figures.

DESCRIPTION DÉTAILLÉE

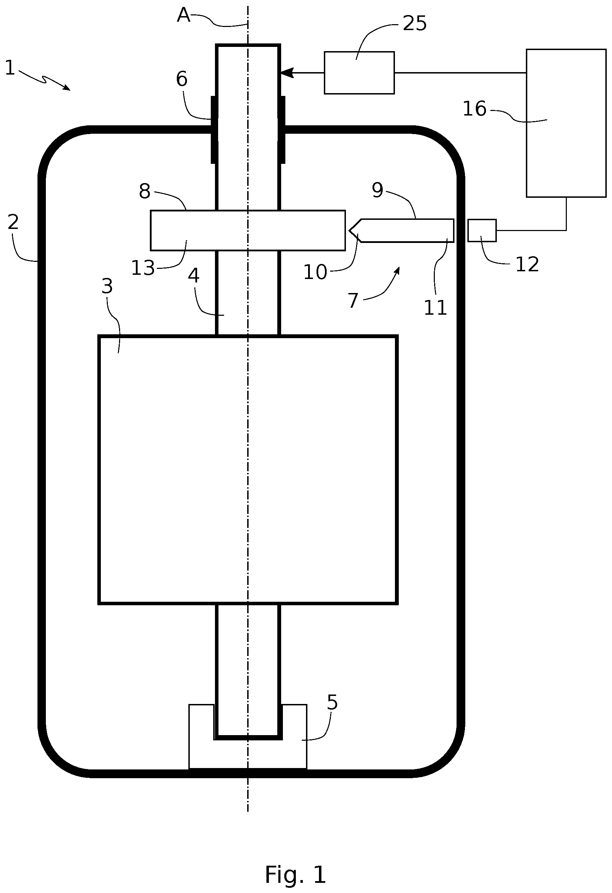

La figure 1 illustre un exemple d'application du dispositif de détection de dérive de position selon l'invention. La figure 1 est une vue schématique en coupe d'une machine de révolution à usage intensif au sein d'une installation industrielle lourde. À titre d'illustration, la machine est une pompe 1 à axe vertical A permettant le refroidissement d'un réacteur nucléaire.

La pompe 1 comporte une enceinte étanche 2 solidaire du stator de la machine, et comporte un rotor 3 couplé à un arbre 4 permettant son entrainement en rotation. L'arbre 4 est en liaison pivot par rapport à l'enceinte 2 grâce à un palier inférieur 5 et un pivot étanche 6.

Dans cet exemple illustratif, les ordres de grandeur pour cette pompe 1 de centrale nucléaire sont les suivants : l'épaisseur de la paroi de l'enceinte 2 est de l'ordre de 100 mm ; la hauteur de la pompe est de l'ordre de 4 m ; le diamètre de la pompe est de l'ordre de 2 m ; l'enceinte 2 supporte une pression de l'ordre de 80 bars ; la vitesse de rotation du rotor 3 est de l'ordre de 1 500 tours/minute. L'enceinte 2 est réalisée en acier inoxydable.

Le rotor 3 constitue ici un élément mobile qui est animé d'un mouvement cyclique réalisé selon une trajectoire qui s'étend dans un plan de mouvement. Dans le présent exemple, ce mouvement cyclique est un mouvement de rotation, et le plan de mouvement est un plan horizontal, perpendiculaire à la direction axiale A. Le plan de mouvement est ici défini comme un plan dans lequel s'inscrit la trajectoire d'un point du rotor 3, de son arbre 4, ou de tout élément couplé en rotation au rotor 3. Autrement dit, les points du rotor 3 présentent chacun une trajectoire qui s'inscrit dans un plan de mouvement qui est ici horizontal.

Dans ce type d'application critique, le fonctionnement de la pompe est surveillé en continu et il est notamment nécessaire de contrôler la dérive de la position axiale du rotor 3. En effet, le rotor 3 est normalement uniquement animé d'un mouvement de rotation autour de l'axe A, mais sous l'effet de l'usure ou d'une avarie, le rotor 3 peut subir un déplacement en translation le long de l'axe A. C'est le cas, dans l'exemple illustré, lorsque le palier inférieur 5, qui supporte ici une part importante du poids du rotor 3, s'use et permet à l'arbre 4 un léger mouvement axial vers le bas.

La pompe 1 peut donc subir une dérive inopportune de son rotor 3 transversalement à son plan de mouvement. Plus précisément, dans l'exemple illustré, cette dérive du rotor 3 est perpendiculaire au plan de mouvement, c'est-à-dire qu'elle est ici verticale.

Afin de contrôler cette dérive de position, la pompe 1 comporte un dispositif de détection de dérive de position 7 qui permet de mesurer les petits déplacements axiaux de l'arbre 4 sans interférer avec l'enceinte 2.

Le dispositif de détection de dérive de position 7 comporte une cible magnétique 8 solidaire en rotation du rotor 3 et présentant une signature magnétique qui est variable suivant la direction de dérive (la direction axiale A). La signature magnétique de la cible magnétique 8 est constituée par un champ magnétique présentant certaines singularités repérables au cours de la rotation de la cible magnétique 8. Cette signature magnétique est dite variable suivant la direction de dérive, car elle est différente pour deux mesures de champ magnétique prises à des hauteurs différentes sur la cible magnétique 8 (c'est-à-dire à des positions différentes suivant la direction axiale A) pendant la rotation de cette dernière.

Le dispositif de détection de dérive de position 7 comporte de plus un circuit magnétique 9 comprenant une tête de lecture 10, ainsi qu'un émetteur magnétique 11.

Le circuit magnétique 9 est agencé de sorte que l'émetteur magnétique 11 soit disposé en regard de la face interne de l'enceinte 2. Le dispositif 7 comporte de plus un capteur magnétique 12 qui est disposé en regard de la face externe de la paroi de l'enceinte 2, et en vis-à-vis de l'émetteur magnétique 11.

L'émetteur magnétique 11 et le capteur magnétique 12 sont ainsi disposés face-à-face de part et d'autre de la paroi de l'enceinte 2. Ces éléments peuvent être par exemple montés sur des fixations (non représentées) solidaires de la paroi de l'enceinte 2, ou sur tout autre support les maintenant fixes par rapport à l'enceinte 2.

La paroi constituant l'enceinte 2 est de préférence isolante et amagnétique, ou seulement amagnétique comme dans l'exemple illustré où l'enceinte 2 est réalisée en acier inoxydable.

Le dispositif de détection de dérive de position 7 comporte de plus une unité de commande 16 connectée au capteur magnétique 12. L'unité de commande 16 reçoit le signal provenant du capteur magnétique 12 et comporte des moyens de calcul classiques qui sont ici programmés pour détecter et quantifier, à partir de ce signal, une dérive de la position axiale de la cible magnétique 8, et donc du rotor 3. L'unité de commande 16 est par ailleurs reliée au système de commande central de la pompe 1 (non représenté) et peut notamment transmettre des informations de maintenance, voire des alertes, au système de commande central.

La pompe 1 comprend de plus un capteur de mouvement de l'élément mobile, constitué ici d'un capteur de rotation 25 fournissant notamment à l'unité de commande 16 un signal de tour signalant chaque nouvelle période de rotation du rotor, et éventuellement la vitesse de rotation du rotor.

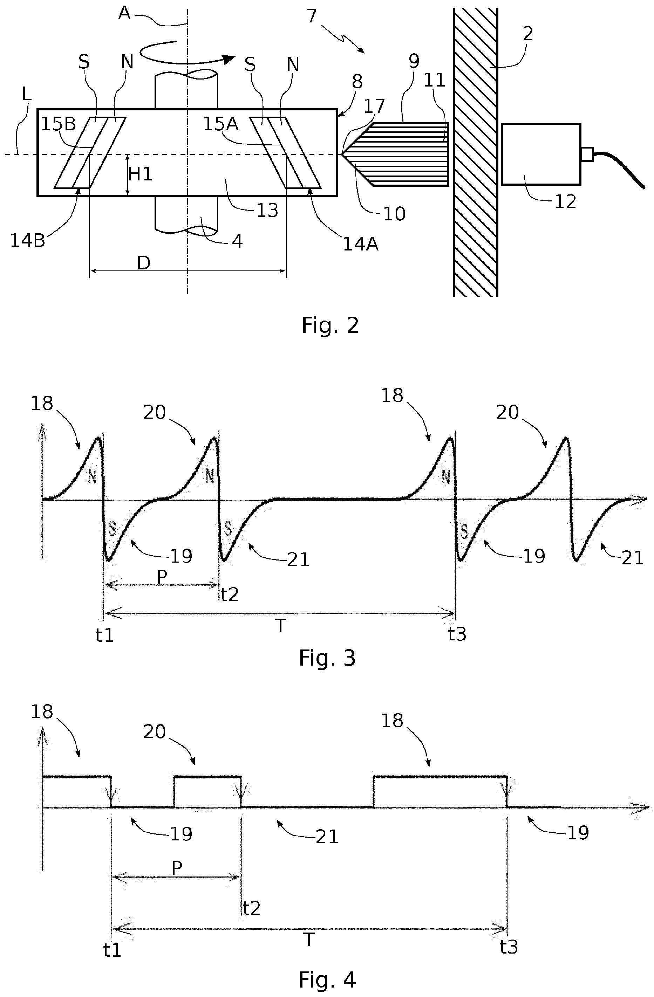

La figure 2 est une vue de détail du dispositif de détection de dérive de position 7 de la pompe de la figure 1, selon un premier mode de réalisation.

La cible magnétique 8 est ici constituée d'un collet 13 fixé sur l'arbre 4, perpendiculairement à la direction axiale A. Le collet 13 est ainsi entrainé en rotation conjointement avec l'arbre 4. Dans cet exemple, la cible magnétique 8 présente une signature magnétique produite par des aimants permanents disposés de manière oblique par rapport à la direction axiale A. La cible magnétique 8 comporte une pluralité d'aimants (deux aimants 14A, 14B sur la figure 2) présentant chacun une forme de barreau comportant deux portions longitudinales juxtaposées, formées des deux polarités N, S de l'aimant. Ces aimants 14A, 14B sont fixés sur le collet 13, dans une position oblique, opposés l'un à l'autre. Chacun des aimants 14A, 14B comporte une frontière 15A, 15B qui délimite les pôles nord N et sud S de chaque aimant. Dans l'exemple illustré, les aimants sont disposés de sorte que, dans le sens de rotation du rotor 3, le pôle nord d'un aimant succède au pôle sud de l'autre aimant.

Les frontières 15A, 15B entre les pôles N, S définissent des singularités de la signature magnétique qui sont disposées obliquement l'une vers l'autre, c'est-à-dire qu'elles sont obliques et non parallèles. L'avantage du positionnement oblique illustré est que la distance entre deux de ces singularités, mesurée dans un plan perpendiculaire à la direction axiale A, dépend de manière linéaire du positionnement axial de l'arbre 4.

En variante, les aimants 14A, 14B peuvent être disposés selon tout autre agencement qui permet une signature magnétique de la cible magnétique 8 variable le long de la direction axiale A, c'est-à-dire présentant des singularités dont l'identification permet de rendre compte de la position axiale de l'arbre 4.

Le circuit magnétique 9 comporte ici un barreau formé d'une seule pièce : la tête de lecture 10 étant placée à l'une de ses extrémités et l'émetteur magnétique 11 à l'autre de ses extrémités. Ce circuit magnétique 9 est destiné à canaliser le champ magnétique créé par le passage des aimants 14A, 14B devant la tête de lecture 10. Le circuit magnétique 9 est de préférence un élément à forte perméabilité magnétique et est par exemple réalisé par un empilement de feuilles de fer doux ou de ferrite sous forme de tôles feuilletées qui s'étendent ici parallèlement à l'axe longitudinal L du circuit magnétique 9 (les tôles feuilletées sont schématisées par des stries horizontales sur la figure 2). En fonction de la vitesse de rotation du rotor 3, le signal considéré par la tête de lecture 10 peut contenir des fréquences de plusieurs centaines de hertz ou plusieurs kilohertz, et un tel circuit magnétique 9 est adapté au passage de cette fréquence en limitant l'atténuation liée aux courants de Foucault et aux pertes par hystérésis.

La tête de lecture 10, qui est dans ce premier mode de réalisation constituée du même empilement de tôles feuilletées, présente une extrémité 17 en pointe telle qu'une extrémité conique ou pyramidale. Cette extrémité 17 en pointe permet une bonne résolution spatiale permettant à la tête de lecture 10 d'être sensible au champ magnétique généré par la cible magnétique 8 au niveau d'une zone ponctuelle située dans le prolongement de l'axe longitudinal L. Cette zone ponctuelle est soumise au champ magnétique généré par la cible magnétique 8 à une hauteur H1 de cette cible magnétique 8, déterminée le long de la direction axiale A.

Le circuit magnétique 9 est fixe par rapport à la paroi de l'enceinte 2 de sorte que l'extrémité 17 de la tête de lecture 10 soit positionnée en vis-à-vis de la cible magnétique 8 et proche de cette dernière, par exemple à une distance de 1 millimètre. Avec une distance de 1 mm, la précision de la mesure de la position axiale peut être inférieure à 0,1 mm environ.

Lors du montage initial du dispositif de détection de dérive de position 7 sur la pompe 1, le circuit magnétique 9 est positionné pour que l'extrémité 17 de la tête de lecture 10 soit à la hauteur prédéterminée H1. L'épaisseur de la cible magnétique 8 (c'est-à-dire sa dimension suivant la direction axiale A) est choisie pour que, même en cas de dérive maximale, l'extrémité 17 de la tête de lecture 10 reste en vis-à-vis de la cible magnétique 8.

La hauteur H1 correspond à une distance D entre les deux singularités constituées par les frontières 15A, 15B des aimants 14A, 14B. Un déplacement axial de l'arbre 4 entraine une variation de la hauteur H1, et donc de la distance D, ce qui permet la détection de la dérive et la mesure de cette dérive.

Selon ce premier mode de réalisation, le champ magnétique vu par l'extrémité 17 de la tête de lecture 10 est canalisé par le circuit magnétique 9 et est émis au niveau de l'émetteur magnétique 11 disposé en regard de la paroi de l'enceinte 2.

Le capteur magnétique 12 mesure le champ magnétique émis par l'émetteur magnétique 11 à travers la paroi de l'enceinte 2. Le capteur magnétique 12 est un magnétomètre classique basé sur toute technologie connue (bobine, magnétorésistif, effet Hall, fluxgate, etc.) permettant la mesure d'un champ magnétique. Sa fonction est de fournir à l'unité de commande 16 des informations relatives à l'intensité et à la direction du champ magnétique émis par l'émetteur magnétique 11. Le capteur magnétique 12 est également monté sur la paroi de l'enceinte 2, au plus proche de cette dernière, et en vis-à-vis de l'émetteur magnétique 11.

Lors de la rotation du rotor 3, et donc de la cible magnétique 8, les aimants 14A, 14B vont passer tour à tour devant l'extrémité 17 de la tête de lecture 10. Selon l'exemple illustré (rotation dans le sens de la flèche) la tête de lecture 10 va cycliquement (à chaque tour de rotor 3) réaliser la séquence suivante :

- détecter l'approche du pôle nord N du premier aimant 14A ;
- détecter le passage de la frontière 15A ;
- détecter le pôle sud S du premier aimant 14A, et l'éloignement de ce pôle sud S ;
- détecter l'approche du pôle nord N du deuxième aimant 14B ;
- détecter le passage de la frontière 15B ;
- détecter le pôle sud S du deuxième aimant 14B, et l'éloignement de ce pôle sud S.

La figure 3 est un graphique de la mesure du champ magnétique réalisée par le capteur magnétique 12, et illustre la séquence qui vient d'être décrite. Un premier tronçon 18 du graphique correspond à une augmentation de l'amplitude du champ magnétique relative à l'approche du pôle nord N du premier aimant 14A. Le passage de la frontière 15A correspond à une zone de transition rapide avec le passage par une valeur nulle à un instant t1, correspondant ici à une première singularité magnétique repérable.

Un tronçon 19 correspond ensuite au passage devant le pôle sud S du premier aimant 14A, puis à l'éloignement par rapport à ce premier aimant 14A. Le champ magnétique repasse par une valeur nulle et le graphique comporte ensuite un tronçon 20 correspondant à une augmentation de l'amplitude du champ magnétique relative à l'approche du pôle nord N du deuxième aimant 14B. Le passage de la frontière 15B correspond à une zone de transition rapide avec le passage par une valeur nulle à un instant t2, correspondant ici à une deuxième singularité magnétique repérable.

Un tronçon 21 correspond ensuite au passage devant le pôle sud S du deuxième aimant 14B, puis à l'éloignement par rapport à ce deuxième aimant 14B. Le champ magnétique repasse ensuite par une valeur nulle et les deux aimants 14A, 14B sont ainsi passés devant l'extrémité 17 de la tête de lecture 10.

Le cycle recommence ensuite avec un nouveau tronçon 18 correspondant au deuxième passage du premier aimant 14A, avec le passage de la frontière 15A et le passage par une valeur nulle à un instant t3. Les tronçons 18, 19, 20, 21 se déroulent ensuite de manière cyclique avec la rotation du rotor 3.

Le temps T s'écoulant entre les instants t1 et t3 correspond à la période d'une rotation complète de la cible magnétique 8. La phase P entre les deux instants t1 et t2 correspond à la distance entre les deux singularités, et est donc une fonction linéaire du déplacement axial du rotor 3, indépendamment de la vitesse de rotation de la pompe 1.

La phase P est représentative de la durée entre deux singularités de la signature magnétique de la cible magnétique 8. La variation de la hauteur H1 (voir figure 2), suite à une dérive de la position axiale de la cible magnétique 8, entraine une variation proportionnelle de la phase P.

La figure 4 illustre le signal de la figure 3 après mise en forme par un comparateur au niveau de l'unité de commande 16 de manière à faciliter l'identification des singularités de la cible magnétique 8, pour la détermination de la phase P.

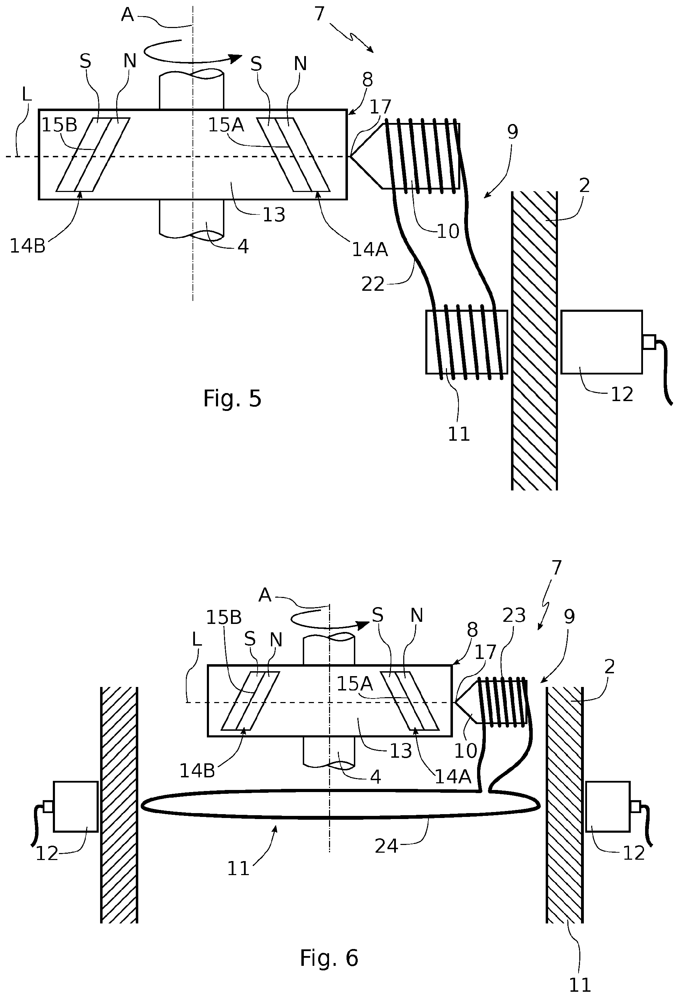

La figure 5 illustre un deuxième mode de réalisation du dispositif de détection de dérive de position 7. Selon ce deuxième mode de réalisation, le circuit magnétique 9 comporte des pièces distinctes formant la tête de lecture 10 et l'émetteur magnétique 11.

La tête de lecture 10 et l'émetteur magnétique 11 sont indépendants et peuvent être réalisés par tous moyens de canalisation d'un champ magnétique, notamment des tôles feuilletées comme dans le premier mode de réalisation. La tête de lecture 10 est montée sur des moyens de support qui lui sont propres, adaptés à positionner l'extrémité 17 de la même manière que dans le premier mode de réalisation.

L'émetteur magnétique 11 est également positionné avec ses propres moyens de fixation au plus proche de la paroi de l'enceinte 2, en vis-à-vis du capteur magnétique 7.

Le circuit magnétique 9 est ici complété par une double bobine 22 formée d'un conducteur enroulé d'une part sur la tête de lecture 10 et enroulé d'autre part sur l'émetteur magnétique 11.

Cet agencement permet de découpler la tête de lecture 10 de l'émetteur magnétique 11, de sorte que la tête de lecture 10 puisse être placée au plus près de la cible magnétique 8, tandis que l'émetteur magnétique 11 est également disposé au plus près de la paroi de l'enceinte 2, indépendamment du positionnement de la tête de lecture 10. L'émetteur magnétique 11 peut ainsi s'adapter à l'enceinte 2 en prenant en compte des problématiques d'encombrement, de formes complexes de l'enceinte 2, etc.

Selon ce deuxième mode de réalisation, le capteur magnétique 12 ne mesure plus directement le champ magnétique provenant de la tête de lecture 10, mais plutôt la variation de ce champ magnétique qui induit un courant dans la double bobine 22. La variation du champ magnétique vu par l'extrémité 17 de la tête de lecture 10 fait ainsi apparaitre un courant induit circulant dans la double bobine 22, et ce courant induit permet à l'émetteur magnétique 11 de produire lui-même un champ magnétique. L'émetteur magnétique 11 est ici formé d'une bobine émettrice qui est alimentée par ce courant induit.

Bien que cette disposition du circuit 9 induise des pertes, le champ magnétique relevé par le capteur magnétique 12 reste exploitable. Dans ce cadre, la résistance du conducteur constituant la double bobine 22 ne doit pas être trop supérieure à l'inductance du circuit formé par cette double bobine 22.

La figure 6 illustre l'invention, suivant un mode de réalisation du dispositif de détection de dérive de position 7 dans lequel l'émetteur magnétique 11 est réalisé par une boucle rayonnante 24 disposée sur la circonférence interne de l'enceinte 2. Ce mode de réalisation est particulièrement avantageux dans le cas d'une machine de révolution avec une enceinte 2 circulaire, ou proche d'une forme circulaire.

Le circuit magnétique 9 comporte une tête de lecture 10 de même type que celle du deuxième mode de réalisation, sur laquelle est enroulée une bobine 23 constituée d'un conducteur unique bouclé. En plus de la bobine 23, ce conducteur forme une spire en dehors de la tête de lecture 10 et s'étendant sur la circonférence interne de l'enceinte 2. Cette spire forme une boucle rayonnante 24 qui constitue l'émetteur magnétique 11.

La boucle rayonnante 24 est maintenue par tout moyen de fixation lui permettant de rester fixe par rapport à la paroi de l'enceinte 2, de préférence suivant un plan perpendiculaire à la direction axiale A. La boucle rayonnante 24 fait le tour de l'intérieur de l'enceinte 2, en restant au plus près de la paroi.

L'émetteur magnétique 11 constitué de la boucle rayonnante 24 est ainsi adapté à produire un champ magnétique mesurable sur toute la circonférence extérieure de la pompe 1. Cette disposition permet de placer le capteur magnétique 12 en vis-à-vis de la bouche d'émission 24, à une quelconque position angulaire sur la paroi de l'enceinte 2. Le capteur magnétique 12 peut ainsi être disposé au mieux, notamment à la position angulaire la mieux adaptée à son encombrement et à son positionnement par rapport à l'unité de commande 16.

De même que pour le deuxième mode de réalisation, l'émetteur magnétique 11 produit un champ magnétique relatif au courant induit circulant dans la boucle rayonnante 24, lui-même généré par la variation du champ magnétique vu par la tête de lecture 10.

Cet agencement permet de plus d'utiliser plusieurs capteurs magnétiques 12 pour améliorer le rapport signal/bruit et améliorer la détection de la dérive de position au niveau de l'unité de commande 16. Les capteurs magnétiques 12 détectent le champ magnétique rayonné par le courant induit dans la boucle rayonnante 24. La figure 6 illustre en exemple deux capteurs 12 diamétralement opposés sur l'enceinte 2. En moyennant les signaux reçus des différents capteurs magnétiques 12, le bruit vu par les capteurs est additionné de façon quadratique tandis que le signal est additionné en amplitude. Un quadruplement, par exemple, du nombre des capteurs 12 disposés sur la circonférence de l'enceinte 2, en vis-à-vis de la boucle rayonnante 24, entraine un doublement du bruit et un quadruplement du signal, et améliore ainsi le rapport signal/bruit d'un facteur 2. Les mesures des capteurs magnétiques 12 sont ainsi corrélées par minimisation quadratique du bruit, dans un mode de fonctionnement de l'unité de commande 16 qui est ici dénommé « mode d'identification des singularités de la cible magnétique 8 ».

Le rapport signal/bruit peut ainsi être amélioré de manière significative par la possibilité de disposer une pluralité, voire un grand nombre, de capteurs magnétiques 12 répartis sur toute la circonférence de l'enceinte 2, d'autant plus si cette enceinte 2 est de grande dimension comme c'est le cas dans l'exemple illustré.

Un autre avantage à utiliser plusieurs capteurs magnétiques est de pouvoir positionner ces capteurs en mesure de gradient, de sorte que le signal utile soit détecté et que le champ magnétique perturbateur de sources éloignées soit rejeté. Cette disposition est intéressante pour un émetteur constitué d'une boucle rayonnante, mais peut aussi être mise en œuvre pour tous les modes de réalisation.

Pour tous les modes de réalisation décrits précédemment, l'unité de commande 16 réalise l'acquisition du signal issu du ou des capteurs magnétiques 12 et traite ces données de manière à fournir une mesure périodique de la position axiale de la cible magnétique 8. Le dispositif de détection de dérive de position 7 est destiné à détecter des dérives de cette position axiale, c'est-à-dire des déplacements faibles en comparaison avec le mouvement nominal de rotation du rotor 3. La périodicité des mesures de position axiale de la cible magnétique 8 n'est donc pas nécessairement élevée. Par exemple, dans l'exemple illustré visant une pompe de centrale nucléaire, une seule mesure par heure, voire par jour, de la position axiale de la cible magnétique 8 est suffisante pour détecter une dérive. Le ou les capteurs magnétiques 12 ne nécessitent pas une bande passante importante.

Compte tenu de la faible fréquence de production des mesures de position axiale, l'unité de commande 16 procède avantageusement à une extraction du signal par rapport au bruit vu par le ou les capteurs magnétiques 12. Le dispositif de détection de dérive de position 7 peut en effet être mis en œuvre au sein d'une installation industrielle complexe générant un important bruit électromagnétique.

L'unité de commande 16 est adaptée de plus, dans son mode d'identification des singularités de la cible magnétique 8, à corréler par minimisation quadratique du bruit les mesures du ou des capteurs magnétiques 12 sur plusieurs tours. L'unité de commande 16 moyenne des valeurs de champ magnétique mesuré, en fonction de la rotation du rotor 3. Grâce aux informations du capteur de rotation 25, l'unité de commande 16 réalise une autocorrélation dans laquelle, à chaque tour de la cible magnétique 8, une mesure de champ magnétique est moyennée avec la même mesure lors du tour précédent, de manière à augmenter le rapport signal/bruit comme exposé précédemment. Cette corrélation peut aussi être réalisée, en variante, avec un top de synchronisation externe fourni à l'unité de commande 16.

Compte tenu de l'amplitude du champ magnétique vu par la tête de lecture 10, le bruit sera vraisemblablement grand par rapport au signal correspondant aux singularités des moments t1 et t2. Au fur et à mesure des rotations du rotor 3, le bruit est minimisé et le signal apparait plus clairement par cette minimisation quadratique du bruit. L'unité de commande 16 réalise de préférence, dans son mode d'identification des singularités de la cible magnétique 8, une acquisition numérique de la valeur du champ magnétique capté par le capteur magnétique 12 et synchronise cette acquisition avec des indicateurs de début de tour fournis par le capteur de rotation 25. Les moyennes sont réalisées en faisant la somme de toutes les mesures de même position angulaire, pour tous les tours. Ces sommes sont réalisées sur un grand nombre de tours, et sont ensuite divisées par ce nombre de tour pour obtenir, sur plusieurs heures ou plusieurs jours un signal exploitable.

Ce mode de fonctionnement de l'unité de commande 16 permet à titre d'exemple d'augmenter le rapport signal bruit d'un facteur 100 en 10 000 secondes, ce qui correspond à quelques heures, ce temps de mesure étant parfaitement compatible avec la présente application de mesures d'une dérive de position.

À titre d'exemple, la mise en œuvre suivante du troisième mode de réalisation a obtenu des résultats de mesure satisfaisants :

- la cible magnétique est constituée de 2 pièces polaires de 2 mm x 15 mm, avec un aimant de moins de 10 mm de côté ;
- la boucle rayonnante 24 est constituée d'un conducteur de 1,5 mm$^2$ de section et présente une circonférence de 60 cm ;
- la bobine 23 comporte huit spires de ce conducteur de 1,5 mm$^2$ de section, ce nombre de spires étant prévu pour que l'impédance de cette bobine soit proche de l'impédance de la boucle rayonnante 24 ;
- le courant généré dans la boucle est de 0,94 A de crête à crête ;
- le capteur magnétique 12 présente un gain de 1 V/uT et une bande passante de 0,5 Hz - 3 kHz.

Le champ magnétique rayonné par un courant de 0,94 A est proche de 1,5 A/m à une distance de 10 centimètres soit 1,9 $\mu$T dans l'air. Une mesure du champ magnétique à 20 cm de la boucle rayonnante 24 donne une valeur de 50 nT de crête à crête. La plupart des magnétomètres de précision (pouvant ici être employés comme capteur magnétique 12) peuvent présenter un plancher de bruit de l'ordre de 1 pT.Hz$^{-1/2}$ soit un seuil 20 000 fois inférieur aux valeurs relevées ici.

En fonction de l'épaisseur et la nature de la paroi, l'atténuation peut être importante, et il est nécessaire que le plancher de bruit soit très en dessous du signal utile. L'atténuation apportée par une paroi est liée à son épaisseur comparée à l'épaisseur de peau $\delta$ :

$$\delta = 66.10^{-3} \, (\sigma r . \mu r . F)^{-1/2}$$

avec :

$\delta$ = épaisseur de peau, en mètre
$\sigma r$ = conductivité relative par rapport au cuivre (sans dimension)
$\mu r$ = perméabilité magnétique relative du matériau (sans dimension)
F = fréquence, exprimée en Hz

Lorsque l'on connait l'épaisseur de peau, on peut calculer l'absorption en dB :

$$8,7 \, . \, e \, / \, \delta$$

avec :

e = épaisseur de la paroi conductrice
$\delta$ = épaisseur de peau, dans la même unité que e

Pour que l'atténuation soit faible, il faut un matériau isolant, amagnétique et une fréquence basse.
Application numérique :
Soit une paroi en acier inoxydable 18/8 de 10 mm d'épaisseur.

$$\sigma r = 0,028$$

$$\mu r = 1$$

$$F = 1 \text{ kHz}$$

$$\delta = 66.10^{-3} \, (0,028 . 1000)^{-1/2} = 12,5 \text{ mm}$$

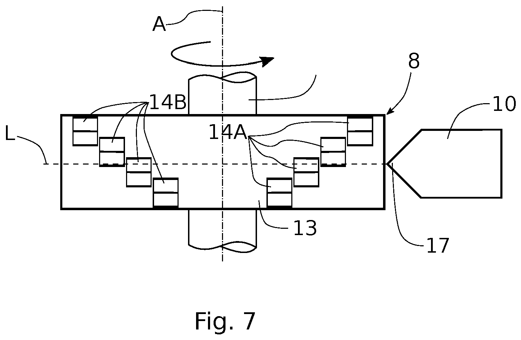

L'atténuation est donc assez faible, l'absorption valant 6,9 dB
La figure 7 illustre une variante de réalisation pour la signature magnétique de la cible magnétique 8. Selon cette variante, des aimants 14A, 14B sont fixés sur la cible magnétique mais ne sont pas disposés obliquement. Tous les aimants 14A, 14B sont disposés de sorte que leurs polarités soient disposées de part et d'autre d'un axe perpendiculaire à la direction axiale A.
Un premier ensemble d'aimants 14A (au nombre de quatre dans l'exemple illustré) est prévu avec des aimants 14A décalés les uns des autres suivant la direction axiale A. Un deuxième ensemble d'aimants 14B est prévu de la même manière et disposé symétriquement. Plusieurs aimants décalés remplacent ainsi un seul aimant en position oblique. La position axiale à mesurer est alors donnée par la position de l'aimant donnant le signal électrique le plus faible. En traçant l'amplitude du signal électrique de chaque aimant, on peut avoir accès à une précision absolue bien meilleure que la distance d'écartement des aimants.
Plusieurs configurations sont possibles dans ce contexte, par exemple : une tête de lecture et plusieurs aimants ; un seul aimant et plusieurs têtes de lecture ; les aimants sont fixes et les têtes de lecture tournent ; les têtes de lecture sont fixes et les aimants tournent.
Il est également possible d'utiliser plusieurs aimants et plusieurs têtes de lecture, positionnés de sorte qu'à chaque tour, le signal présente un motif périodique spécifique. Une détection synchrone peut alors extraire le signal du bruit plus efficacement.

Des variantes de réalisation de l'invention peuvent être mises en œuvre. Par exemple, le dispositif de détection de dérive de position peut être appliqué à toute autre dérive lente que peut subir une machine en fonctionnement cyclique.

En dehors des machines rotatives, le dispositif de détection de dérive de position peut par ailleurs être appliqué à d'autres machines animées d'un mouvement cyclique, tel que le mouvement produit par un ensemble biellemanivelles ou en ensemble arbre à cames-poussoirs.

## Revendications

1. Machine de révolution comportant un rotor (3) monté dans une enceinte (2) fermée, le rotor (3) étant animé d'un mouvement cyclique de rotation selon une trajectoire s'étendant dans un plan de mouvement, ce rotor (3) étant couplé à un arbre (4) permettant son entrainement en rotation, l'arbre (4) étant en liaison pivot par rapport à l'enceinte (2), ladite machine de révolution comportant un dispositif de détection de dérive de la position axiale du rotor (3) selon une direction de dérive (A) qui est transversale au plan de mouvement, le dispositif de détection de dérive de position comportant une cible magnétique (8) couplée au rotor (3) et présentant une signature magnétique variable suivant la direction de dérive (A), cette machine de révolution étant **caractérisée en ce que** le dispositif de détection de dérive de position comporte :

   - un circuit magnétique (9) comportant : une tête de lecture (10) disposée en vis-à-vis de la cible magnétique (8) ; et un émetteur magnétique (11) monté en regard d'une face interne de la paroi d'enceinte (2) contenant le rotor (3) ; le circuit magnétique (9) comprenant une bobine (23) comportant un conducteur qui forme un enroulement autour de la tête de lecture (10) et qui comporte une boucle rayonnante (24) disposée le long de la circonférence interne de la paroi d'enceinte (2), cette boucle rayonnante (24) constituant l'émetteur magnétique (11) ;
   - un capteur magnétique (12) monté en regard d'une face externe de ladite paroi d'enceinte (2), et en vis-à-vis de l'émetteur magnétique (11) ;
   - une unité de commande (16) connectée au capteur magnétique (12) et adaptée à déterminer la durée (T) entre deux singularités de la signature magnétique de la cible magnétique (8).

2. Machine de révolution selon la revendication 1, **ca-**

**ractérisée en ce que** la tête de lecture (10) comporte une extrémité en pointe (17) disposée en vis-à-vis de la cible magnétique (8).

3. Machine de révolution selon l'une des revendications précédentes, **caractérisée en ce que** les singularités de la signature magnétique de la cible magnétique (8) sont définies chacune par une frontière (15A, 15B) entre deux pôles d'un aimant (14A, 14B), ces frontières (15A, 15B) étant disposées obliquement l'une vers l'autre.

4. Machine de révolution selon l'une des revendications précédentes, **caractérisée en ce qu'**elle comporte un capteur de mouvement (25) du rotor (3), et l'unité de commande (16) comporte un mode d'identification des singularités de la cible magnétique (8), dans lequel les mesures du capteur magnétique (12) sur plusieurs cycles de mouvement du rotor (3) sont corrélées par minimisation quadratique du bruit.

5. Machine de révolution selon l'une des revendications 1 à 4, **caractérisée en ce qu'**il comporte au moins deux capteurs magnétiques (12) adaptés à être répartis sur la circonférence externe de la paroi d'enceinte (2), en vis-à-vis de la boucle rayonnante (24).

6. Machine de révolution selon la revendication 5, **caractérisée en ce que** l'unité de commande (16) comporte un mode d'identification des singularités de la cible magnétique (8), dans lequel les mesures des capteurs magnétiques (12) sont corrélées entre elles par minimisation quadratique du bruit.

## Patentansprüche

1. Rotierende Maschine, umfassend einen Rotor (3), der in einem geschlossenen Gehäuse (2) montiert ist, wobei der Rotor (3) in eine zyklische Drehbewegung entlang einer sich in einer Bewegungsebene erstreckenden Bahn versetzt wird, wobei dieser Rotor (3) mit einer Welle (4) gekoppelt ist, die seinen Drehantrieb ermöglicht, wobei die Welle (4) in Drehgelenkverbindung in Bezug auf das Gehäuse (2) ist, wobei die rotierende Maschine eine Vorrichtung zur Erkennung einer Abweichung der axialen Position des Rotors (3) entlang einer Abweichungsrichtung (A) umfasst, die quer zu der Bewegungsebene verläuft, wobei die Vorrichtung zur Erkennung einer Positionsabweichung ein magnetisches Target (8) umfasst, das mit dem Rotor (3) gekoppelt ist und eine variable magnetische Signatur entlang der Abweichungsrichtung (A) aufweist, wobei diese rotierende Maschine **dadurch gekennzeichnet ist, dass** die Vorrichtung zur Erkennung einer Positionsabweichung umfasst:

- einen Magnetkreis (9), umfassend: einen Lesekopf (10), der gegenüber dem magnetischen Target (8) angeordnet ist; und einen magnetischen Sender (11), der einer Innenseite der Gehäusewand (2), die den Rotor (3) enthält, zugewandt montiert ist; wobei der Magnetkreis (9) eine Spule (23) aufweist, die einen Leiter umfasst, der eine Wicklung um den Lesekopf (10) herum bildet und der eine strahlende Schleife (24) umfasst, die entlang des inneren Umfangs der Gehäusewand (2) angeordnet ist, wobei diese strahlende Schleife (24) den magnetischen Sender (11) darstellt;
- einen magnetischen Sensor (12), der einer Außenseite der Gehäusewand (2) zugewandt und gegenüber dem magnetischen Sender (11) montiert ist;
- eine Steuerungseinheit (16), die an den magnetischen Sensor (12) angeschlossen ist und dazu geeignet ist, die Dauer (T) zwischen zwei Singularitäten der magnetischen Signatur des magnetischen Targets (8) zu bestimmen.

**2.** Rotierende Maschine nach Anspruch 1, **dadurch gekennzeichnet, dass** der Lesekopf (10) ein spitzes Ende (17) umfasst, das gegenüber dem magnetischen Target (8) angeordnet ist.

**3.** Rotierende Maschine nach einem der vorhergehenden Ansprüche, **dadurch gekennzeichnet, dass** die Singularitäten der magnetischen Signatur des magnetischen Targets (8) jeweils durch eine Grenze (15A, 15B) zwischen zwei Polen eines Magneten (14A, 14B) definiert sind, wobei diese Grenzen (15A, 15B) schräg zueinander angeordnet sind.

**4.** Rotierende Maschine nach einem der vorhergehenden Ansprüche, **dadurch gekennzeichnet, dass** sie einen Bewegungssensor (25) des Rotors (3) umfasst und die Steuerungseinheit (16) einen Modus zur Identifikation der Singularitäten des magnetischen Targets (8) umfasst, bei dem die Messungen des magnetischen Sensors (12) über mehrere Bewegungszyklen des Rotors (3) durch quadratische Minimierung des Rauschens korreliert werden.

**5.** Rotierende Maschine nach einem der Ansprüche 1 bis 4, **dadurch gekennzeichnet, dass** sie mindestens zwei magnetische Sensoren (12) umfasst, die dazu geeignet sind, am äußeren Umfang der Gehäusewand (2), gegenüber der strahlenden Schleife (24), verteilt zu werden.

**6.** Rotierende Maschine nach Anspruch 5, **dadurch gekennzeichnet, dass** die Steuerungseinheit (16) einen Modus zur Identifikation der Singularitäten des magnetischen Targets (8) umfasst, bei dem die Messungen der magnetischen Sensoren (12) durch quadratische Minimierung des Rauschens untereinander korreliert werden.

## Claims

**1.** Rotary machine having a rotor (3) mounted in a closed enclosure (2), the rotor (3) being made to carry out a cyclic rotational movement along a trajectory extending in a plane of movement, this rotor (3) being coupled to a shaft (4) allowing it to be driven in rotation, the shaft (4) being pivot connected with respect to the enclosure (2), said rotary machine having a device for detecting drift of the axial position of the rotor (3) in a drift direction (A) that is transverse to the plane of movement, the position drift detection device having a magnetic target (8) coupled to the rotor (3) and having a magnetic signature that is variable in the drift direction (A), this rotary machine being **characterized in that** the position drift detection device has:

- a magnetic circuit (9) having: a read head (10) disposed facing the magnetic target (8); and a magnetic emitter (11) mounted opposite an internal face of the wall of the enclosure (2) containing the rotor (3); the magnetic circuit (9) comprising a coil (23) having a conductor that forms a winding around the read head (10) and that has a radiating loop (24) disposed along the internal circumference of the wall of the enclosure (2), this radiating loop (24) constituting the magnetic emitter (11);
- a magnetic sensor (12) mounted opposite an external face of said wall of the enclosure (2), and facing the magnetic emitter (11);
- a control unit (16) connected to the magnetic sensor (12) and designed to determine the duration (T) between two singularities of the magnetic signature of the magnetic target (8).

**2.** Rotary machine according to Claim 1, **characterized in that** the read head (10) has a pointed end (17) disposed facing the magnetic target (8).

**3.** Rotary machine according to either of the preceding claims, **characterized in that** the singularities of the magnetic signature of the magnetic target (8) are each defined by a boundary (15A, 15B) between two poles of a magnet (14A, 14B), these boundaries (15A, 15B) being disposed obliquely towards one another.

**4.** Rotary machine according to one of the preceding claims, **characterized in that** it has a movement sensor (25) for the rotor (3), and the control unit (16) has a mode for identifying the singularities of the magnetic target (8), wherein the measurements from the magnetic sensor (12) over a plurality of cycles of movement of the rotor (3) are correlated by quadratic minimization of the noise.

5. Rotary machine according to one of Claims 1 to 4, **characterized in that** it has at least two magnetic sensors (12) designed to be distributed around the external circumference of the wall of the enclosure (2), facing the radiating loop (24).

6. Rotary machine according to Claim 5, **characterized in that** the control unit (16) has a mode for identifying the singularities of the magnetic target (8), wherein the measurements from the magnetic sensors (12) are correlated with each other by quadratic minimization of the noise.

Fig. 1

Fig. 2

Fig. 3

Fig. 4

Fig. 5

Fig. 6

Fig. 7

## RÉFÉRENCES CITÉES DANS LA DESCRIPTION

**Documents brevets cités dans la description**

- US 4689990 A
- JP 3081075 B
- US 8527214 B
- DE 19853062